# EUROPEAN PATENT APPLICATION

(11) **EP 2 423 977 A1**
(43) Date of publication of application: **29.02.2012**
(21) Application number: 11007066.1
(22) Date of filing: 31.08.2011
(51) Int. Cl.: H01L 31/042, H01L 31/048

(54) **Photovoltaic panel for greenhouses and greenhouse photovoltaic covering structure comprising the panel**

(30) Priority: 31.08.2010 IT VI20100240
(71) Applicant: Solarkey S.r.l., 33050 Rivarotta di teor (UD) (IT)
(72) Inventor: De Toni, Gabriele, 36100 Vicenza (IT)
(74) Representative: Maroscia, Antonio

(57) **Abstract**

A modular photovoltaic panel for a greenhouse covering structure, in which the covering structure **(7)** comprises at least one substantially planar load-bearing framework **(6)** and a plurality of modular covering members **(9, 9', 9",...)** having standardized dimensions *(l,* **w)** along respective mutually-orthogonal longitudinal **(X)** and transverse **(Y)** directions, such members **(9, 9', 9",...)** removably anchored to the framework **(6)** in mutually coplanar and longitudinally side-by-side positions, comprises a substantially rectangular frame **(16)** having transverse and longitudinal dimensions **(d₁, d₂)** that are equal to or are multiples of the standardized dimensions **(w,** *l*) for substituting at least one corresponding modular member **(9, 9', 9",...),** the frame **(16)** enclosing collector means **(17)** at its interior, such means (17) designed for supplying a predetermined and standardized output voltage (V) and/or current (I) for the connection to a power grid.

## Description

### Field of application

The present invention has its application in the technical field of greenhouses for agriculture, and particularly has as object a photovoltaic panel for greenhouses.

The invention also has as object a photovoltaic covering structure for greenhouses comprising the panel according to the invention.

### State of the Art

It is known that greenhouses used in agriculture are generally constituted by a reticular metal structure covered with transparent walls, in order to allow the passage of sunlight inside the greenhouse, and by a covering roof, it too at least partially transparent.

In a widely-used configuration, greenhouse roofs are formed by a pair of substantially planar and mutually-pitched roof sections, one of which is directed southward, the other northward in order to maximize the energy supply.

Each pitched roof section is formed by a load-bearing framework constituted by a pair of parallel longitudinal members joined by a plurality of mutually equidistant transverse members, in order to define corresponding seats for housing respective covering modules side-by-side each other.

The modules are also anchored to the framework in a manner such that they can be separately removed.

In particular, the southward-directed pitched roof section has several or all of its modules at least partially made of a transparent material, e.g. glass or a polymer material such as polycarbonate, in order to allow the passage of light and heating inside the greenhouse.

In order to make the greenhouse autonomous from an energy standpoint, some transparent modules of the roof are often substituted with photovoltaic panels or with special panels formed by transparent zones alternated with opaque zones that comprise photovoltaic cells, in a manner so as to obtain a production of electrical energy sufficient to satisfy most of the greenhouse energy needs.

Nevertheless, the installation of photovoltaic panels on the greenhouse roof, even if advantageous from the energy standpoint, presents several difficulties, especially when it is necessary to substitute a pre-existing module of a greenhouse with a solar cell module.

A first drawback is represented by the fact that the dimensions of the solar panels commonly found on the market do not coincide with those of the standard modules for greenhouse roofs, making their installation difficult.

Consequently, once the conventional module is removed, it is necessary to alter the structure of the greenhouse, by making an additional framework that allows stably housing the photovoltaic panel.

It is clear, however, that such framework leads to considerable additional cost. Moreover, it is custom-designed, starting from the dimensions of the photovoltaic panels intended to be used and from the dimensions of the greenhouse roof.

In addition, in order to allow the fastening of the framework to the greenhouse roof, it is necessary to provide suitable anchorage means on the roof structure, which make framework obtainment more complex.

Finally, the modular structure of the greenhouse roof will have to have dimensions such to support its own weight as well as the weight of the additional framework.

### Presentation of the invention

The object of the present invention is to overcome the above-mentioned drawbacks, by making a photovoltaic panel for greenhouses that is highly efficient and relatively inexpensive.

A particular object is to obtain a photovoltaic panel for greenhouses that can be easily mounted on a pre-existing covering of a greenhouse in substitution of a conventional module, without having to redesign the covering.

Another object is to obtain a photovoltaic panel with non-standard dimensions that can in any case be connected to a standard electrical power grid.

Not least object of the present invention is to obtain a photovoltaic covering structure for greenhouses that can be redesigned in a simple and quick manner by adding one or more photovoltaic panels to its covering, in a manner so as to make it energetically autonomous.

Such objects, as well as others which will be clearer below, are attained by a photovoltaic panel, in accordance with claim 1, applicable to a greenhouse covering structure, in which the covering structure comprises at least one substantially planar load-bearing framework and a plurality of modular covering members having standardized dimensions along respective mutually-orthogonal longitudinal and transverse directions, such members removably anchored to said framework in coplanar and mutually side-by-side positions.

The panel is characterized in that it comprises a substantially rectangular peripheral frame having longitudinal and transverse dimensions that are equal to or are multiples of said standardized dimensions for substituting at least one corresponding modular member, said frame enclosing collector means at its interior, such means designed for supplying a predetermined and standardized output voltage and/or current for the connection to a power grid.

Due to this particular configuration, the photovoltaic panel will have the same dimensions as a conventional covering module, and thus can be applied to the covering in substitution of one of such modules, without it being necessary to redesign the covering of the greenhouse by arranging further panel anchorage systems.

According to a further aspect of the invention, a photovoltaic covering structure for greenhouses is provided in accordance with claim 15, comprising at least one photovoltaic panel according to the invention.

Advantageous embodiments of the invention are obtained in accordance with the dependent claims.

### Brief description of the drawing

Further characteristics and advantages of the invention will be clearer in light of the detailed description of a preferred but not exclusive embodiment of a photovoltaic panel for greenhouses according to the invention and of a covering structure for greenhouses comprising the panel according to the invention, illustrated as a non-limiting example with the aid of the drawing table set, in which:
FIG. 1 is a side view of a photovoltaic greenhouse structure according to the invention;
**FIGURES 2** and **3** are two top front frontal views of a panel according to the invention in two preferred configurations;
**FIG. 4** is a rear frontal view of the panel according to the invention;
**FIG. 5** is a cross section view, not in scale, of the panel of Fig. 2, along the trace plane *V-V.*

### Detailed description of a preferred embodiment

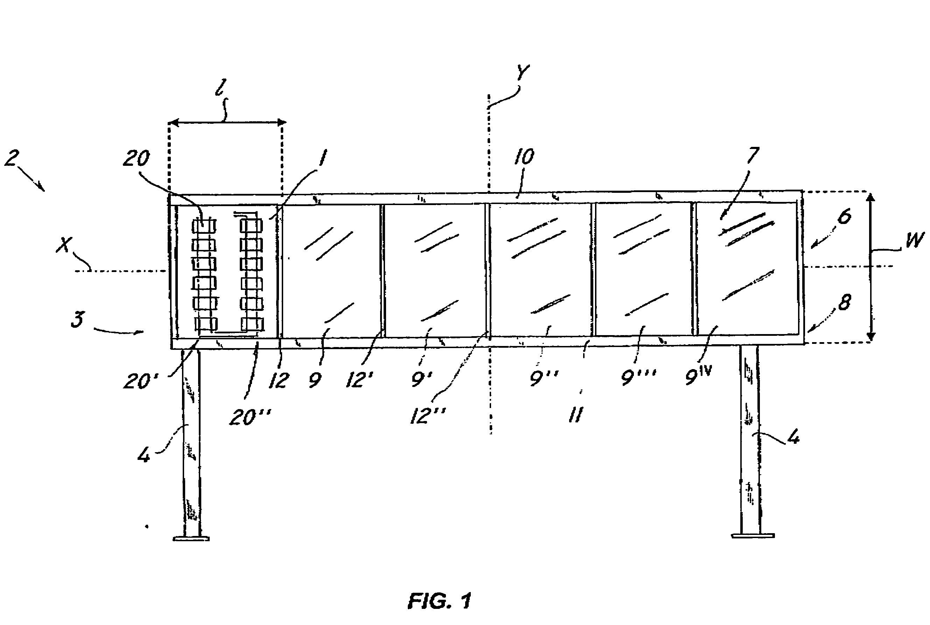

With reference to the mentioned figures, a photovoltaic panel for greenhouses, indicated overall with the number **1,** can be applied to the covering of a greenhouse of conventional type, reported in **Fig. 1** with its most basic components and indicated with **2.**

In the illustrated configuration, preferred but not exclusive for the present invention, the greenhouse structure **2** will have a load-bearing framework **3** with a lower portion **4** anchorable to the ground and an upper portion **5** having at least one substantially planar and rectangular support framework **6** associated with a modular covering structure **7.**

In particular, the greenhouse structure **2** will be of the type having a covering structure **7** formed by two planar, mutually-pitched roof sections, of which only one is visible in the figures and indicated with **8.**

The support framework **6** has standardized longitudinal and transverse dimensions respectively along mutually-orthogonal longitudinal and transverse directions **X, Y.**

The covering structure 7 is also formed by a plurality of modular covering members **9, 9', 9"**,... removably coupled to the framework **6** in mutually coplanar and longitudinally side-by-side positions.

In particular, each of the covering members **9, 9', 9",...** has standardized longitudinal *l* and transverse **w** dimensions.

The support framework **6** will therefore delimit one of the pitched roof sections **8** and will be constituted by a pair of substantially longitudinal and parallel longitudinal members **10, 11** having identical longitudinal dimension and by a plurality of transverse members **12, 12', 12",** ... for the connection of the longitudinal members **10, 11.**

The number of transverse members **12, 12', 12",** ... can vary as a function of the overall longitudinal dimension of the framework **6,** substantially coinciding with that of the longitudinal members **10, 11.**

In any case, the transverse members **12, 12', 12",** ... will be longitudinally spaced with a same standardized distance for this greenhouse type 2, substantially coinciding with the transverse dimension of the framework **6,** in order to define a plurality of spaces 13, 13', 13", ... having identical longitudinal and transverse dimensions, substantially coinciding with those of the covering members **9, 9', 9",...**

Each of these spaces **13, 13', 13",** ... will be designed to removably receive a respective covering module **9, 9', 9",** ... in a manner such that the same results fixed to the framework 6 only at the longitudinal edges **14, 15** associated with respective longitudinal members **10, 11** and in abutment against the transverse members **12, 12', 12",** ...

Preferably, the covering members **9, 9', 9",** ... will be of the type that are at least partially optically transparent and will have surface extensions equal to each other and substantially coinciding with those of the spaces 13, **13', 13",** ....

One or more of the covering members **9, 9', 9",** ..., possibly all the covering members **9, 9', 9",** ...,, will be constituted by a photovoltaic panel 1 according to the present invention.

The panel **1** essentially comprises a substantially rectangular frame **16** anchorable to the support framework **6** of the covering structure **7** and having at least one first dimension **d₁** substantially equal to or a multiple of one of the standardized transverse w or longitudinal *l* dimensions of the covering members **9, 9', 9",** ... or of the covering structure **7** of the greenhouse **2.**

In addition, the frame **16** encloses collector means 17 designed for supplying a predetermined and standardized output voltage V and/or current I for the connection of the panel 1 to an electrical power grid of conventional type.

In particular, the collector means **17** can be connected both to the general power grid and to an electrical power supply plant, not illustrated, for managing the single greenhouse or a group of greenhouses.

Preferably, the first dimension d₁ of the frame 16 will be that measured along first edges **18, 19** intended to be placed parallel to the transverse members **12, 12', 12",...** and will be substantially equal to the transverse dimension **w** of the modules of the framework **6.**

The second dimension **d₂** will instead be that measured along second edges **14, 15** orthogonal to the first **18, 19** and designed to be placed parallel to the longitudinal members **10, 11;** such edges **14, 15** are stably and removably anchored to the members **10, 11.**

Advantageously, the first dimension **d₁** will be comprised between 1800mm and 2200mm and preferably will be substantially equal to 2000mm.

The second dimension **d₂** will be equal to the longitudinal dimension *l* of the covering members **9, 9', 9", ...** if the panel 1 is intended to substitute a single member **9, 9', 9",** ..., as in Fig. 1.

Alternatively, the second dimension **d₂** can be equal to a multiple of the longitudinal dimension *l* of the covering members **9, 9', 9",** if the panel 1 is intended to substitute multiple members **9, 9', 9",** ...

Preferably, the second dimension d₂ can be comprised between 500mm and 700mm and is preferably equal to about 600mm.

The collector means **17** will comprise a plurality of photovoltaic cells 20 that are substantially coplanar and distributed on two or more substantially transverse rows **20', 20".**

The photovoltaic cells **20** can be of the type commonly present on the market, as a non-limiting example made of polycrystalline silicon with thickness substantially comprised between 150µm and 270 µm and preferably between 240 µm and 270 µm.

Preferably, the cell rows **20', 20"** will be formed by a same number of cells **20** and the cells **20** of each row **20', 20"** will be mutually electrically connected in series with common output terminals **21.**

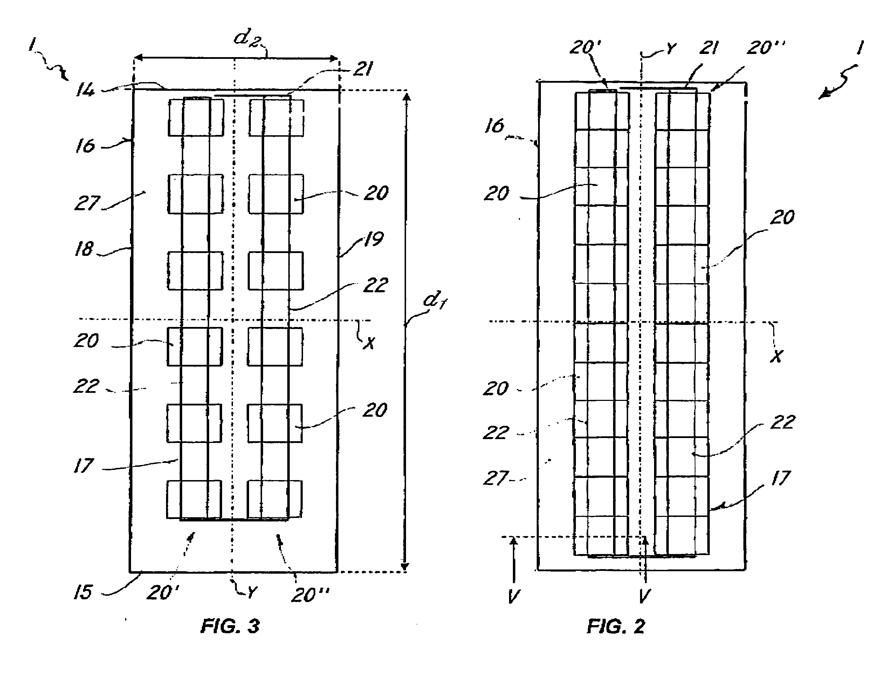

As is more clearly observed in **Figures 2** and **3****,** the cells **20** of the first row **20'** will also be connected in series with the cells **20** of the second row **20".**

The connection can be obtained by means of interconnection strips **22** with 5mm*0.2mm section and made of tin and silver, in respective weight percentages of 96.5% and 3.5%.

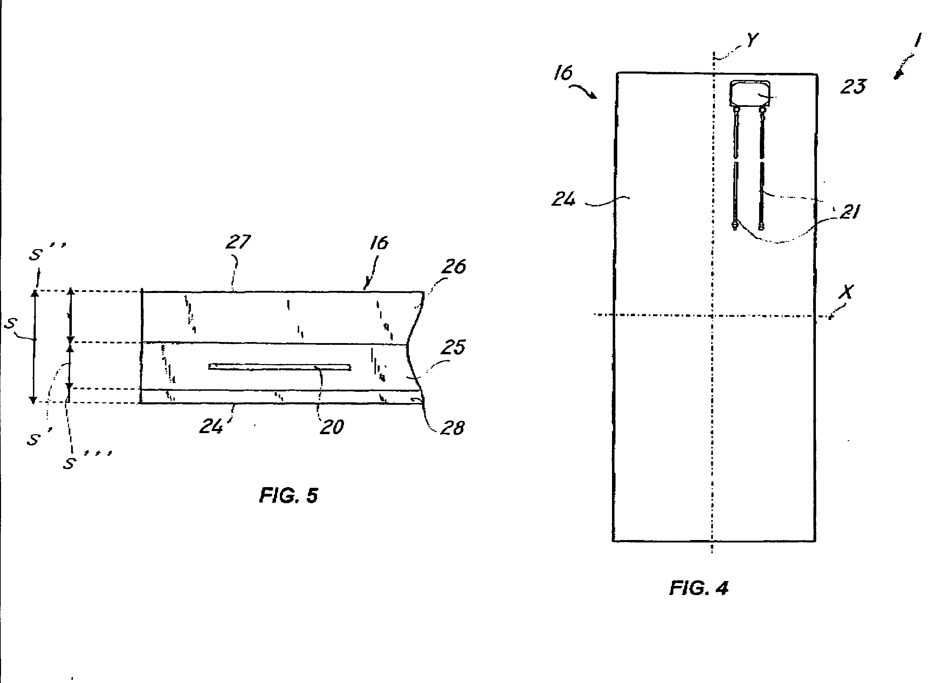

As is visible in **Fig. 4****,** the collector means **17** will also comprise a quick-coupling connection device **23,** arranged on the lower face **24** of the frame **16,** i.e. on the face intended to be turned towards the interior of the greenhouse 2, reached by the output terminals **21.**

Preferably, the connection device **23** will be placed at a cell **20** in a manner so as to not diminish the level of transparency of the panel **1.**

The frame **16** will be substantially planar, with predetermined total extension.

The cells **20** will define an optically opaque portion having predetermined partial extension, whereas the remaining portion of the frame **16** will be at least partially optically transparent.

In a preferred embodiment, the panel 1 according to the invention comprises cell rows **20', 20",** each comprising a predetermined same number of cells **20.**

In the configuration of **Fig. 2****,** the cells **20** are distributed on two transverse rows **20', 20"** each formed by 12 cells. The overall extension of the cells **20** will be such that their overall extension substantially covers 50% of the total extension of the frame **16.**

Consequently, also the optically transparent portion will have extension substantially equal to 50% of the total extension of the frame **16.**

The two rows **20', 20"** will also be spaced along a first direction substantially parallel to the longitudinal dimension d₂ and coinciding with the longitudinal direction **X** when the panel **1** is mounted on the support framework **6.**

For each row **20', 20",** the cells **20** will be substantially and continuously adjacent along a second extension direction Y orthogonal to the first.

In a preferred configuration, the cells 20 will be designed to supply a maximum output power of 90W and a no-load voltage of about 14.75 V, with lower-than-normal design tolerances. Naturally, such values are merely indicative and relative to a condition of maximum irradiation, and hence can vary even considerably in the case of reduced irradiation.

In the configuration of **Fig. 3****,** there are two cell rows 20', 20" present, each formed by 6 cells.

Also in this case, the two rows **20', 20"** are spaced along the first direction **X.** Nevertheless, the cells **20** of each row **20', 20"** are also spaced with constant distance along the second direction **Y.**

In this configuration, the overall extension of the cells 20 will be equal to about 25% of the total surface extension of the frame 16, whereas the optically transparent portion **16"** will have extension substantially equal to 75% of the total surface extension of the frame **16.**

In a preferred configuration, the cells **20** will be designed for supplying a maximum output power of 45W and a no-load voltage of about 7.4V, with lower-than-normal design tolerances. Naturally, also in this case, such values are merely indicative and relative to a maximum irradiation condition, and hence they can vary even considerably in the case of reduced irradiation.

Generally, regardless of the particular distribution and the number of cells **20,** the no-load voltage, as well as that at full load, and the maximum power of the panel **1** according to the invention will be directly proportional to the total number of cells **20,** while the output current will naturally be constant and equal to a predetermined value, e.g. close to 7.43A at full load.

Illustrated in **Fig. 5** is a section of the panel **1** according to the invention common for both of the above-described configurations. The panel **1** will be of multilayer type and the frame **16** will have total thickness **s** of about 5mm.

In particular, the frame **16** will comprise an encapsulating layer **25** made of a first base material that is at least partially optically transparent, in which the cells **20** will be embedded.

The encapsulating layer **25** can be single or formed by two separate, mutually-connected substrates, with overall thickness **s'** comparable to or slightly greater than that of the cells **20.**

The first base material will be of polymer type, in particular EVA with rapid polymerization or the like, or it can be glass or the like.

The frame **16** will also comprise a protection layer **26** made of a second at least partially optically transparent material, designed to define the face **27** of the panel **1** directed outside the greenhouse 2. The thickness s" of the protection layer 26 will be about 4mm. Preferably, the second base material will be tempered glass with low iron content.

The frame **16** will also comprise a support layer or *backsheet 28* placed opposite the protection layer **26** with respect to the encapsulating layer **25** and having an overall thickness **s'''** of about 370 µm.

The support layer **28** can be constituted by at least a third base material of polymer type that is at least partially optically transparent.

Advantageously, the support layer **28** will be formed by a first and a second film made of polyvinyl fluoride, such as TedlarⓇ or the like, and by a third film made of PET or the like interposed between the first and the second films.

Due to this combination of materials and thicknesses, the panel will have high surface load strength and high torsion strength even if the ratio between the first and the second dimension is considerably greater than 1, with the typical values for greenhouse photovoltaic panels of known type.

In addition, the panel according to the invention will be relatively light, with an overall weight of about 15Kg.

From that set forth above, it is clear that the panel according to the invention attains the pre-established objects, and in particular that of providing a photovoltaic panel that can be installed on a covering of a greenhouse in an extremely simple and quick manner, completely substituting a common pre-existing module of the covering.

The panel and the covering structure for greenhouses according to the invention are susceptible to numerous modifications and variants, all falling within the inventive concept expressed in the enclosed claims. All details can be substituted by other technically equivalent elements, and the materials can be different according to requirements, without departing from the scope of the invention.

Even if the panel and the structure were described with particular reference to the enclosed figures, the reference numbers used in the description and in the claims are used for improving the comprehension of the invention and do not constitute any limitation of the claimed protective scope.

## Claims

1. A modular photovoltaic panel for a greenhouse covering structure (7), wherein the covering structure **(7)** comprises at least one substantially planar load-bearing framework **(6)** and a plurality of modular covering members **(9, 9', 9",...)** having standardized dimensions (*l*, **w)** along respective mutually-orthogonal longitudinal **(X)** and transverse **(Y)** directions, such members **(9, 9',** 9",...) being removably anchored to the framework **(6)** in mutually coplanar and longitudinally side-by-side positions, the panel being
**characterized by** comprising a substantially rectangular frame **(16)** having transverse and longitudinal dimensions **(d₁, d₂)** that are equal to or are multiples of said standardized dimensions **(w,** *l*) for substituting at least one corresponding modular member **(9, 9', 9",...),** said frame **(16)** enclosing thereinside photovoltaic collector means **(17)** designed for supplying a predetermined and standardized output voltage **(V)** and/or current (I) for the connection to a power grid.

2. Panel according to claim 1, wherein said transverse dimension **(d₁)** is substantially equal to the standardized transverse dimension **(w)** of the framework **(6)** of the covering **(7).**

3. Panel according to claim 2, wherein said transverse dimension **(d₁)** is comprised between 1800mm and 2200mm and preferably is substantially equal to 2000mm and said longitudinal dimension **(d₂)** is comprised between 500mm and 700mm and is preferably equal to 600mm.

4. Panel according to one or more of the preceding claims, wherein said photovoltaic collector means **(17)** comprise a plurality of photovoltaic cells **(20)** distributed along at least two substantially transverse rows **(20', 20")** having a same predetermined number of cells **(20),** the cells **(20)** of each of said rows **(20', 20")** being mutually electrically connected in series with common output terminals **(21),** said output voltage **(V)** being directly proportional to said number of cells **(20).**

5. Panel according to claim 4, wherein said frame **(16)** is substantially planar with a predetermined total extension, said cells **(20)** defining an optically opaque portion with a predetermined partial extension, the remaining portion of said frame **(16)** being at least partially optically transparent with extension substantially comprised between 50% and 75% of said total extension of said frame **(16).**

6. Panel according to claim 4 or 5, wherein said cell rows **(20', 20")** are spaced along a first direction **(X)** along which said longitudinal dimension **(d₂)** is measured, the cells **(20)** of each of said rows **(20', 20")** being equally spaced along a second direction **(Y)** orthogonal to said first direction (X) and along which said transverse dimension **(d₁)** is measured.

7. Panel according to one or more of claims 4 to 6, wherein said frame **(16)** comprises an encapsulating layer **(25)** made of a first base material of polymer type, at least partially optically transparent, said cells **(20)** being embedded in said encapsulating layer **(25).**

8. Panel according to claim 7, wherein said frame comprises a protection layer **(26)** made of a second at least partially optically transparent material.

9. Panel according to claim 8, wherein said frame comprises a support layer **(28)** placed opposite said protection layer **(26)** with respect to said encapsulating layer **(25),** said support layer **(28)** being made of at least one third base material of polymer type, at least partially optically transparent, said support layer **(28)** comprising a plurality of mutually superimposed films made of respective third polymer materials.

10. Panel according to claim 9, wherein said support layer **(28)** comprises a first and second film made of polyvinyl fluoride, such as Tedlar® or the like, and a third film made of PET or the like interposed between said first and said second films.

11. Panel according to one or more of the preceding claims, wherein said frame **(16)** has a total thickness **(s)** of about 5mm.

12. Panel according to claim 11, wherein said protection layer **(26)** has a thickness **(s")** of about 4mm.

13. Panel according to claim 11 or 12, wherein said support layer **(28)** has a thickness **(s"')** of about 370 µm.

14. Panel according to one or more of claims 11 to 13, wherein said cells **(20)** have a thickness substantially comprised between 150 µm and 270 µm.

15. A photovoltaic covering structure **(7)** for greenhouses, designed to be coupled to a lower portion **(4)** of a greenhouse anchorable to the ground, wherein the structure (7) comprises at least one substantially planar load-bearing framework **(6)** inclined with respect to the ground, a plurality of modular covering members **(9, 9', 9",...)** having standardized dimensions (*l*, **w)** along respective mutually-orthogonal longitudinal **(X)** and transverse **(Y)** directions, such members **(9, 9', 9",...)** being removably anchored to said framework **(6)** in coplanar and mutually side-by-side positions,
**characterized by** comprising one or more modular photovoltaic panels (1), each having a substantially rectangular frame **(16)** with dimensions **(d₁, d₂)** that are equal to or are multiples of said standardized dimensions (*l*, **w)** for substituting one or more corresponding modular members **(9, 9', 9",...),** said frame enclosing collector means **(17)** at its interior, said means (17) being designed for supplying a predetermined and standardized output voltage (V) and/or current (I) for the connection to a power grid.
